# EUROPÄISCHE PATENTSCHRIFT

(11) **EP 1 606 227 B1**
(45) Veröffentlichungstag und Bekanntmachung des Hinweises auf die Patenterteilung: **09.08.2006**
(21) Anmeldenummer: 04717094.9
(22) Anmeldetag: 04.03.2004
(51) Int. Cl.: C04B 24/26, C04B 24/32, C04B 24/16, C04B 24/20

(54) **DISPERGIERMITTEL**
DISPERSING AGENTS
AGENTS DISPERSANTS

(30) Priorität: 27.03.2003 DE 10313937
(43) Veröffentlichungstag der Anmeldung: 21.12.2005
(73) Patentinhaber: Wacker Polymer Systems GmbH & Co. KG, 84489 Burghausen (DE)
(72) Erfinder: DIETRICH, Ulf, Dr., 67591 Wachenheim (DE); REINSCHMIDT, Anke, Dr., Ann Arbor, Michigan 48103 (US)
(74) Vertreter: Schuderer, Michael
(86) Internationale Anmeldenummer: PCT/EP2004/002211
(87) Internationale Veröffentlichungsnummer: WO 2004/085335

(56) Entgegenhaltungen:
- EP-A- 1 090 901
- DE-A- 19 806 482
- US-A- 5 362 829

## Beschreibung

Die Erfindung betrifft Dispergiermittel auf der Basis von Polyoxyalkenyl-funktionellen Copolymerisaten, Verfahren zu deren Herstellung sowie deren Verwendung.

Mörtelmassen auf der Basis von anorganischen Bindemitteln wie Zement, Kalk und Gips werden zur Verbesserung deren Verarbeitbarkeit, beispielsweise deren Fließfähigkeit, Dispergiermittel zugesetzt. Um solche Mörtelmassen in einer verarbeitbaren Konsistenz zur Verfügung zu stellen, ist im allgemeinen wesentlich mehr Anmachwasser erforderlich, als für den Aushärtungs- bzw. Hydratationsschritt zur Verfestigung des Mörtels. Dieser überschüssige, bei der Aushärtung verdunstende Wasseranteil führt zur Verschlechterung der mechanischen Festigkeit der Baustoffmassen. Um die Konsistenz, das heißt die Fließfähigkeit von Mörtelmassen bei einem gegebenen Wasser-Bindemittel-Verhältnis zu verbessern, werden Dispergiermittel, sogenannte Verflüssiger zugegeben.

Als Verflüssiger für fließfähige hydraulisch abbindende Mörtelsysteme sind aus der WO-A 97/13732 Stoffe auf der Basis von Ligninsulfonat bekannt. Die DE-A 19538821 beschreibt Sulfonathaltige Kondensationsprodukte auf Basis von Amino-S-Triazinen mit wenigstens zwei Aminogruppen und Formaldehyd. In der WO-A 00/75208 werden Kondensate von sulfonierten Aromaten und Formaldehyd beschrieben. Derartige Verflüssiger sind jedoch teilweise - zumindest für Innenanwendungen, wegen der Freisetzung von Formaldehyd - ökologisch umstritten.

Bekannt sind weiterhin, beispielsweise aus der DE-A 19539460, Verflüssiger für zementäre Systeme auf der Basis von 2-Methyl-2-Acrylamidopropansulfonsäure oder anderen starken Polyelektrolyten. Diese Dispergiermittel können in der Regel nur in Kombination mit emulgatorstabilisierten Polymerdispersionen verwendet werden. In Verbindung mit den im Baubereich mehrheitlich verwendeten polyvinylalkoholstabilisierten Dispersionen haben diese den Nachteil, dass sie zu einer massiven Destabilisierung von Polymerdispersionen (bis hin zur Koagulation) oder den daraus hergestellten Redispersionspulvern führen. Sollte eine Abmischung mit Polyvinylalkohol-stabilisierten Dispersionen nicht sofort koagulieren, so äußert sich dies vornehmlich darin, dass in der Anwendung die zementären Mischungen bereits beim Anrühren stark ansteifen, frühzeitig erstarren oder die geforderten Ausbreitmaße von hydraulisch abbindenden Spachtelmassen nicht mehr erreicht werden. Dazu kommt meist ein starkes Schwinden der Zementmatrix, das bis zu einer Rißbildung führen kann.

Ein weiterer Nachteil der bisher genannten Verflüssiger ist das Faktum, dass die verflüssigende Wirkung nicht über einen ausreichend langen Zeitraum anhält. Dies führt zu einer Verkürzung der Verarbeitungszeit, welche dann problematisch wird, wenn zwischen Anrühren der Baustoffmasse und deren Verarbeitung ein längerer Zeitraum liegt.

Eine länger anhaltende verflüssigende Wirkung zeigen sogenannte Hochleistungsverflüssiger. Aus der EP-A 792850 sind zementäre Zusammensetzungen bekannt, welche als Verflüssiger Copolymere enthalten aus kurzkettigen Polyalkylenglykol-(meth)acrylaten, langkettigen Polyalkylenglykol-(meth)acrylaten und ethylenisch ungesättigten Carbonsäuren. Die EP-A 590983 betrifft Zementverflüssiger auf der Basis von Copolymeren aus (Meth)acrylsäure, ethylenisch ungesättigten Sulfonaten, Polyethylenglykol-(meth)allylether, Ester der (Meth)acrylsäure mit Polyethylenglykolmonoethern, sowie gegebenenfalls (Meth)acrylsäureester. In der DE-A 10063291 werden Zementverflüssiger auf Polycarboxylat-Basis beschrieben, wobei im Copolymer noch Comonomereinheiten mit Polyoxyalkylen-Gruppen und Comonomereinheiten mit OH-, CO- oder Sulfonat-Gruppen enthalten sind. Die EP-A 816298 beschreibt Verflüssiger, welche durch Copolymerisation von Polyoxyethylen-funktionellen Monomeren, Polyoxyethylen-Polyoxypropylen-haltigen Monomeren und ethylenisch ungesättigten sulfonatfunktionellen Comonomeren erhalten werden.

Diese Verflüssiger zeichnen sich durch längeranhaltende verflüssigende Wirkung aus, neigen aber zur Wasserabsonderung (Bluten). Damit einher gehen eine erschwerte Verarbeitung (Verteilung auf dem zu glättenden Untergrund) und eine geringe Selbstheilung.

In der EP-A 1090901 wird ein Verfahren beansprucht zur Herstellung von Polyalkylenglykol-Monomeren mittels Veresterung eines Polyalkylenglykols mit einer ungesättigten Carbonsäure. Weiter wird die Herstellung von Dispergiermitteln beschrieben, wobei diese Dispergiermittel jeweils aufgebaut sind aus einem ungesättigten Polyetherester-Monomer einem Methacrylsäure(salz)-Monomer, sowie gegebenenfalls einem Methallylsulfonat-Monomer. Die DE-A 19806482 betrifft Verdickungsmittel auf der Basis von Copolymerisaten auf Basis von a)Acrylamidoalkyl-sulfonaten, b) (Meth)acrylamiden, c) ethylenisch ungesättigten Ammoniumverbindungen, d) ethylenisch ungesättigten Polyethylenglykolen. Die US-A 5362829 beschreibt Zementverflüssiger auf Basis von Copolymerisaten aus a) (Meth)acrylsäuresalz, b) Methallylsulfonat, c)Polyethylenglykolallylether, d) Polyethylenglykol(meth)acrylat, e) (Meth)acrylsäurealkylester.

Weiterhin wird Casein als Verflüssiger in fließfähigen hydraulisch abbindenden Mörtelsystemen eingesetzt. Casein bietet einzigartige Verlaufs-, Verarbeitungs- und Selbstheilungseigenschaften für fließfähige hydraulisch abbindende Mörtelsysteme und weist zusätzlich einen Bindemittelcharakter auf. Casein ist ein Milcheiweiß, das durch Säurefällung erhalten wird. Es ist - abhängig von der jeweiligen Saison und Futterqualität - durch starke Qualitätsschwankungen gekennzeichnet. Dies erschwert den Einsatz in fließfähigen hydraulisch abbindenden Mörtelsystemen. Weiterhin neigen caseinhaltige fließfähige hydraulisch abbindende Mörtelsysteme nach der Verarbeitung zur Bildung von Schimmelkulturen, was in Wohnbereichen nicht wünschenswert ist.

Es bestand daher die Aufgabe, Dispergiermittel zur Verfügung zu stellen, welche in zementären Systemen eine langanhaltende verflüssigende Wirkung zeigen, sowohl mit emulgator- als auch schutzkolloid-stabilisierten Systemen verträglich sind, und die vorteilhaften rheologischen Eigenschaften von Casein zeigen.

Gegenstand der Erfindung sind Dispergiermittel auf der Basis von Copolymerisaten erhältlich durch Polymerisation von
a) 5 bis 70 Gew.-% einem oder mehreren Monomeren aus der Gruppe umfassend ethylenisch ungesättigte Monocarbonsäuren, ethylenisch ungesättigte Carbonsäureamide, ethylenisch ungesättigte Dicarbonsäuren und deren Anhydride, mit jeweils 4 bis 8 C-Atome, sowie (Meth)acrylsäuremonoester von Dialkoholen-mit 2 bis 8 C-Atomen,
b) 1 bis 40 Gew.-% von einem oder mehreren Monomeren aus der Gruppe umfassend ethylenisch ungesättigte, sulfonat- oder sulfat-funktionelle Verbindungen,
c) 10 bis 80 Gew.-% von einem oder mehreren Monomeren aus der Gruppe umfassend ethylenisch ungesättigte Verbindungen von Polyethylenglykolen mit 1 bis 300 Ethylenoxideinheiten, und endständigen OH-Gruppen oder Ethergruppen -OR', wobei R' ein Alkyl-, Aryl-, Alkaryl-, Aralkyl-Rest mit 1 bis 40 C-Atomen sein kann,
d) 5 bis 80 Gew.-% von einem oder mehreren Monomeren aus der Gruppe umfassend ethylenisch ungesättigte Verbindungen von Polyalkylenglykol mit 1 bis 300 Alkylenoxideinheiten von Alkylengruppen mit 3 bis 4 C-Atomen, und endständigen OH-Gruppen oder Ethergruppen -OR', wobei R' ein Alkyl-, Aryl-, Alkaryl-, Aralkyl-Rest mit 1 bis 40 C-Atomen sein kann,
jeweils bezogen auf das Gesamtgewicht des Copolymerisats, wobei sich die Angaben in Gew.-% auf 100 Gew.-% aufaddieren.

Geeignete Monomere a) sind Acrylsäure, Methacrylsäure, Itaconsäure, Fumarsäure, Maleinsäure, sowie die Salze der genannten Carbonsäuren, Maleinsäureanhydrid, Acrylamid, Methacrylamid, Hydroxyethyl(meth)acrylat, Hydroxypropyl(meth)acrylat, Hydroxybutyl(meth)acrylat. Bevorzugt werden Acrylsäure und Methacrylsäure sowie deren Salze. Die Monomereinheiten a) sind vorzugsweise in einer Menge von 5 bis 40 Gew.-%, besonders bevorzugt 10 bis 25 Gew.-% copolymerisiert.

Geeignete Monomere b) sind Vinylsulfonsäure und deren Alkali-und Erdalkalimetallsalze, Styrolsulfonsäure und deren Alkali-und Erdalkalimetallsalze, Methallylsulfonsäure und deren Alkali- und Erdalkalimetallsalze, p-Methallyloxyphenylsulfonsäure und deren Alkali- und Erdalkalimetallsalze, und Sulfonsäuren der allgemeinen Formel CH₂=CR¹-CO-X-CR²R³-R⁴-SO₃H sowie deren Alkali- und Erdalkalimetallsalze, wobei X = O oder NH, und R¹, R², R³ gleich oder verschieden sind und die Bedeutung H und C₁₋bis C₃-Alkyl haben, und R⁴ C₁- bis C₄-Alkylen ist. Bevorzugt werden 2-Acrylamido-2-methylpropansulfonsäure und Methallylsulfonsäure sowie jeweils deren Alkali- und Erdalkalimetallsalze. Besonders bevorzugt sind Gemische aus 2-Acrylamido-2-methylpropansulfonsäure(salz) und Methallylsulfonsäure(salz). Die Monomereinheiten b) sind vorzugsweise in einer Menge von 1 bis 20 Gew.-%, besonders bevorzugt 5 bis 15 Gew.-% copolymerisiert.

Bevorzugte Monomere c) sind die Acrylsäureester und Methacrylsäureester von Polyethylenglykolen und deren Alkylether mit 1 bis 6 C-Atomen, jeweils mit 1 bis 150 Ethylenoxideinheiten. Besonders bevorzugt sind die Acrylsäureester und Methacrylsäureester von Polyethylenglykolen mit jeweils 20 bis 150 Ethylenoxideinheiten und jeweils mit endständiger Hydroxy-Gruppe oder Methoxygruppe. Die Monomereinheiten c) sind vorzugsweise in einer Menge von 30 bis 70 Gew.-% copolymerisiert.

Bevorzugte Monomere d) sind die Acrylsäureester und Methacrylsäureester von Polypropylenglykolen und Polybutylenglykolen sowie deren Alkylether mit 1 bis 6 C-Atomen, mit jeweils 3 bis 100 Alkylenoxideinheiten. Besonders bevorzugt sind die Acrylsäureester und Methacrylsäureester von Polypropylenglykolen mit 3 bis 50 Propylenoxideinheiten und mit endständiger Hydroxy- oder Methoxygruppe. Vorzugsweise sind die genannten Acrylsäureester und Methacrylsäureester von Polypropylenglykolen bzw. Polybutylenglykolen in einer Menge von 5 bis 35 Gew.-% copolymerisiert.

In einer weiteren bevorzugten Ausführungsform leiten sich die Monomereinheiten d) von Acrylsäureestern und Methacrylsäureestern von Polypropylenglykolen und Polybutylenglykolen ab, besonders bevorzugt Polypropylenglykolen ab, welche 3 bis 35 Propylenoxid- oder Butylenoxid-Einheiten enthalten, auf welche 5 bis 80 Ethylenoxid-Einheiten aufgekappt sind. Diese Monomereinheiten sind in einer Menge von 30 bis 70 Gew.-% copolymerisiert.

Gegebenenfalls können noch hydrophobe Comonomereinheiten e) enthalten sein, welche sich von (Meth)acrylsäurestern von Alkoholen mit 1 bis 15 C-Atomen oder Vinylaromaten ableiten. Beispiele hierfür sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Styrol und Vinyltoluol. Falls Comonomereinheiten e) enthalten sind, dann in einer Menge von 0.5 bis 10 Gew.-%.

Die Herstellung der Copolymerisate erfolgt mittels radikalisch initierter Polymerisation, vorzugsweise in wässrigem Medium bei einer Temperatur von 40°C bis 95°C, oder in einer Masse-Lösungs- oder Gelpolymerisation bei einer Temperatur von 40°C bis 150 °C. Geeignete Initiatoren sind wasserlösliche Initiatoren wie die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril, 2,2'-Azobis(2-methylpropionamidin)dihydrochlorid, 2,2'-Azobis[2-(2-imidazolin-2-yl)propan]dihydrochlorid. Die genannten Initiatoren werden im allgemeinen in einer Menge von 0.01 bis 0.5 Gew.-%, bezogen auf das Gesamtgewicht der Monomere, eingesetzt. Es können auch Kombinationen aus den genannten Initiatoren mit Reduktionsmitteln eingesetzt werden. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0.01 bis 2.5 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die damit erhältlichen wässrigen Lösungen oder wässrigen Dispersionen der Copolymerisate können als solche als Dispergiermittel eingesetzt werden. Die Lösungen oder Dispersionen können auch getrocknet werden, beispielsweise mittels Walzen- oder Sprühtrocknung, und die Copolymerisate als Pulver eingesetzt werden. Unabhängig von der Darreichungsform eignen sich die Copolymerisate zur Verwendung als Dispergiermittel. Vorzugsweise als Verdüsungshilfe bei der Sprühtrocknung von wässrigen Dispersionen.

Eine weitere bevorzugte Verwendung ist die als Zementverflüssiger. Bei einer Verwendung der getrockneten oder gelösten Dispergiermittel ohne Polymervergütung werden diese mit 0.1 bis 0.7 Gew.-%, bezogen auf die Gesamtmasse der zementären Trockenmischung, eingesetzt.

In einer besonders bevorzugten Ausführungsform werden die Dispergiermittel als Verdüsungshilfe bei der Sprühtrocknung von wässrigen Dispersionen von Homo- oder Mischpolymerisaten aus einem oder mehreren Monomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide eingesetzt, und die damit erhältlichen, in Wasser redispergierbaren Redispersionspulver zur Modifizierung von Baustoffmassen eingesetzt. Am meisten bevorzugt wird die Verwendung der die Dispergiermittel enthaltenden Redispersionspulver als Zusatz mit verflüssigender (dispergierender) Wirkung, insbesondere für mineralische Bindemittelsysteme oder pigmenthaltige Zubereitungen.

Beispiele für bevorzugte Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Zur Herstellung der in Wasser redispergierbaren Polymerpulver werden die wässrigen Dispersionen der Polymerisate, nach Zusatz der erfindungsgemäßen Dispergiermittel als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird das Dispergiermittel in einer Gesamtmenge von 3 bis 30 Gew.-%, bezogen auf die polymeren Bestandteile der Dispersion, eingesetzt. Das heißt die Gesamtmenge an Dispergiermittel vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Die damit erhältlichen, in Wasser redispergierbaren Polymerpulver-Zusammensetzungen können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), oder Gips, Kalk und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Besonders bevorzugt in selbstverlaufenden Bodenspachtelmassen und Fließestrichen.

Typische Rezepturen von selbstverlaufenden, hydraulisch abbindenden Massen enthalten
100 bis 500 Gew.-Teile Zement wie Portlandzement und/oder Tonerdezement,
300 bis 800 Gew.-Teile Füllstoffe wie Sand und/oder Kalksteinmehl und/oder Silicastäube und/oder Flugaschen,
0 bis 200 Gew.-Teile Anhydrit, Halbhydrat und/oder Gips,
0 bis 50 Gew.-Teile Calciumhydroxid,
0 bis 5 Gew.-Teile Entschäumer,
0.5 bis 10 Gew.-Teile Dispergiermittel,
1 bis 100 Gew.-Teile Redispersionspulver,
0.5 bis 5 Gew.-Teile Verzögerer wie Weinsäure, Citronensäure oder Saccharide,
0.5 bis 5 Gew.-Teile Beschleuniger beispielsweise Alkalicarbonate,
0.2 bis 3 Gew.-Teile Verdicker wie Celluloseether,
wobei sich die Anteile auf 1000 Gew.-Teile aufaddieren, und die Trockenmischung, je nach gewünschter Konsistenz mit der entsprechenden Menge Wasser angerührt wird.

Mit der erfindungsgemäßen Vorgehensweise werden Dispergiermittel erhalten, die in der Anwendung für selbstverlaufende Spachtelmassen (SVM) eine den caseinhaltigen Massen vergleichbare Verarbeitungskonsistenz (Rheologie) und Selbstheilung aufweisen. Weiterhin sind diese Produkte wenig empfindlich gegenüber Bakterienbefall und mit gleichbleibender Qualität herstellbar. Die erfindungsgemäßen Dispergiermittel sind vollständig mit emulgator- oder polyvinylalkoholstabilisierten Dispersionen verträglich und können damit sehr einfach beispielsweise durch Sprühtrocknung in redispergierbare Dispersionspulver überführt werden.

Die Rheologie von selbstverlaufenden, hydraulisch abbindenden Massen läßt sich mittels folgender Kenngrößen charakterisieren:
Speichermodul G' [Pa]:
   Maß für die während des Scherprozesses in der Substanz gespeicherte Deformationsenergie. Diese Energie steht nach der Entlastung vollständig zur Verfügung. G' repräsentiert das elastische Verhalten der Messprobe.
Verlustmodul G'' [Pa]:
   Maß für die während des Scherprozesses in der Substanz verbrauchte und danach für die Substanz verlorene Deformationsenergie. Diese Energie wird entweder zur Veränderung der Probenstruktur aufgebraucht und/oder an die Umgebung abgegeben.
   G'' repräsentiert das viskose Verhalten der Messprobe.
Verlustfaktor tan δ = G''/G':
   Quotient der verlorenen und gespeicherten Deformationsenergie Der Verlustfaktor gibt das Verhältnis zwischen dem viskosen und dem elastischen Anteil des Deformationsverhaltens an.

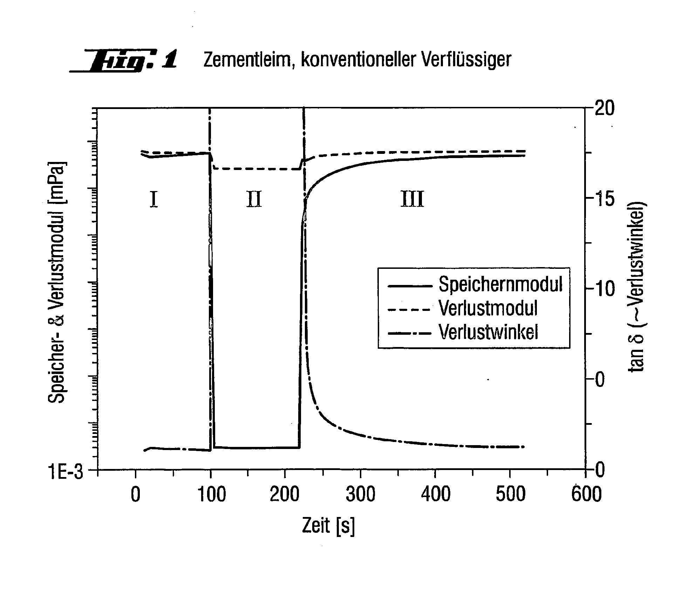

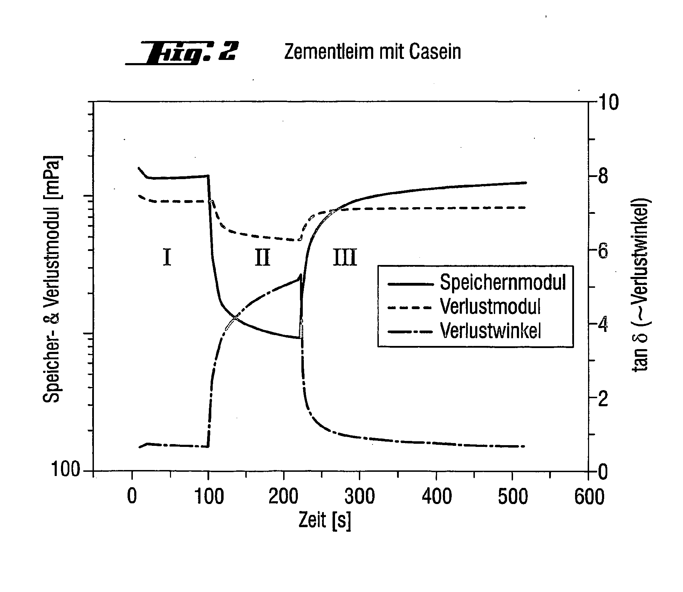

Bisher bekannte Hochleistungsverflüssiger zeigen in den Zementleimmischungen im linear-viskoelastischen (LVE) Bereich eine Rheologie, wie sie in Figur 1 zu sehen ist. Speicher- und Verlustmodul liegen zu Beginn der Messung bei niedriger Scherbelastung auf gleichem Niveau (Fig. 1/I). Bei caseinhaltigen Proben liegt der Speichermodul über dem Verlustmodul. Bei Belastung außerhalb des linear-viskoelastischen Bereichs (Abschnitt x/II) fällt der Speichermodul bei den Mischungen mit synthetischen Verflüssigern sehr stark und sofort ab (Fig. 1/II), im Gegensatz zu einer Mischung, die mit Casein modifiziert ist (Fig. 2/II). Eine Deformation außerhalb des LVE-Bereiches bewirkt in diesem Fall auch eine Erniedrigung der Speicher- und Verlustmodule, der Speichermodul ist aber noch sehr gut meßbar (Fig. 2/II). Dies kommt auch in ansteigenden Verlustfaktoren während der Belastungsphase zum Ausdruck. Es resultiert im allgemeinen ein Tangens des Verlustwinkels von < 80.

Wird die zwischenzeitlich erhöhte Deformation auf das Ausgangsniveau zurückgenommen, so wird bei konventionellen (Hochleistungs)Verflüssigern ein sehr schnelles Relaxieren des zementären Systems beobachtet (Fig. 1/III), während bei caseinhaltigen Zementleimen die Relaxation vergleichsweise langsam abläuft (Fig. 2/III). Dabei übersteigt innerhalb weniger Minuten, im allgemeinen innerhalb weniger als 15 Minuten, der Speichermodul wieder den Verlustmodul, das Ausgangsniveau wird wieder erreicht. Dies ist eine mögliche Erklärung für die sehr gute Selbstheilung von caseinhaltigen Selbstverlaufsmassen.

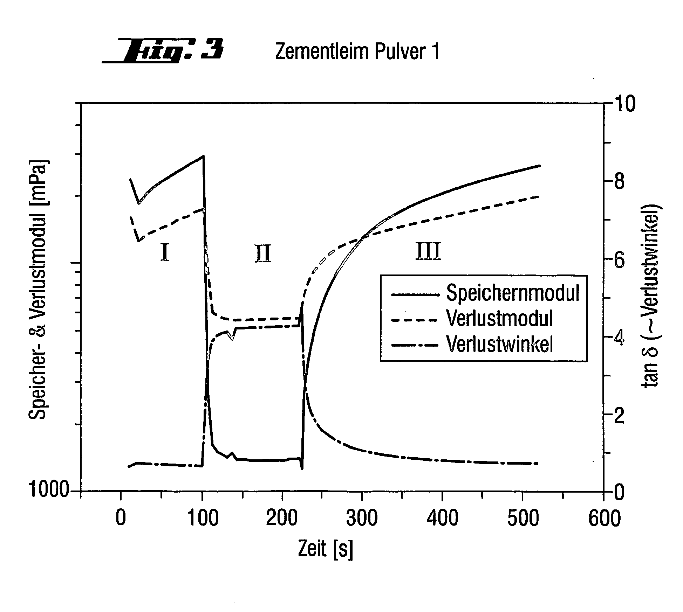

Die neuen synthetisch hergestellten Produkte zeichnen sich durch dem Casein vergleichbare rheologische Eigenschaften in fließfähigen hydraulisch abbindenden Mörtelsystemen aus: Auch hier wird im Bereich I (Fig. 3/I) ein gegenüber dem Verlustmodul erhöhter Speichermodul gefunden. In Bereich II (Fig. 3/II) zeigt sich - wie auch bei caseinhaltigen SVM - ein langsamer Abfall des Speichermoduls auf einen meßbaren Wert, und beim Relaxieren wird ebenfalls ein Überschneiden der Meßkurven von Speicher- und Verlustmodul beobachtet. Der Speichermodul liegt daraufhin wieder auf höherem Niveau als der Verlustmodul.

Die nachfolgenden Beispiele dienen der weiteren Erläuterung der Erfindung:

### Beispiele:

### Beispiel 1:

In einem 16 1 Reaktor wurden 11.74 1 demineralisiertes Wasser, 234 g Acrylsäure, 1.50 kg Methacrylat-Polyethylenglykol-Methylether (45 EO-Einheiten) (Bisomer® S20W, 60 % in H₂O), 336.3 g Kalium-2-Acrylamido-2-Methyl-propansulfonat (50 % in H₂O) und 234.0 g Methacrylat-Polypropylenglykol (9 PO-Einheiten) (Blemmer® PP500) vorgelegt. Die Vorlage wurde auf 80°C erwärmt und danach eine Stoßdosierung von 210 g des Initiators 2,2'-Azobis(2-methylpropionamidin)dihydrochlorid (WAKO® V50, 3 % in H₂O) zugegeben. Die Initiatordosierung wurde nach 5 Minuten mit 400 g/h eingefahren und lief über eine Zeitraum von 2.5 Stunden.
Danach wurde noch eine Stoßdosierung von 75 g der Initiatorlösung zugegeben, für 30 Minuten die Temperatur bei 80°C gehalten und anschließend der Ansatz auf 25°C abgekühlt.
Man erhielt eine 8.9 %-ige alkalilösliche Dispersion mit einem pH-Wert von 3.1.

### Beispiel 2:

In einem 16 1 Reaktor wurden 11.85 1 demineralisiertes Wasser, 234.4 g Acrylsäure, 1.40 kg Methacrylat-Polyethylenglykol-Methylether (45 EO-Einheiten) (Bisomer® S20W, 60 % in H₂O), 468.7 g Kalium-2-Acrylamido-2-Methyl-propansulfonat (50 % in H₂O) und 468.3 g Methacrylat-Polypropylenglykol (9 PO-Einheiten) (Blemmer® PP500) vorgelegt. Die Vorlage wurde auf 80°C erwärmt und danach eine Stoßdosierung von 210 g des Initiators 2,2'-Azobis(2-methylpropionamidin)dihydrochlorid (WAKO® V50, 3 % in H₂O) zugegeben. Die Initiatordosierung wurde nach 5 Minuten mit 400 g/h eingefahren und lief über eine Zeitraum von 2.5 Stunden.
Danach wurde noch eine Stoßdosierung von 75 g der Initiatorlösung zugegeben, für 30 Minuten die Temperatur bei 80°C gehalten und anschließend der Ansatz auf 25°C abgekühlt.
Man erhielt eine 8.4 %-ige alkalilösliche Dispersion mit einem pH-Wert von 3.2.

### Beispiel 3:

In einem 16 1 Reaktor wurden 11.83 1 demineralisiertes Wasser, 234.2 g Acrylsäure, 1.42 kg Methacrylat-Polyethylenglykol-Methylether (45 EO-Einheiten) (Bisomer® S20W, 60 % in H₂O), 468.4 g Kalium-2-Acrylamido-2-Methyl-propansulfonat (50 % in H₂O) und 468.9 g Methacrylat-Polypropylenglykol (9 PO-Einheiten) (Blemmer® PP500) vorgelegt. Die Vorlage wurde auf 80°C erwärmt und danach eine Stoßdosierung von 210 g einer wässrigen Kaliumpersulfat-Lösung (3 % in H₂O) zugegeben. Die Initiatordosierung wurde nach 5 Minuten mit 400 g/h eingefahren und lief über eine Zeitraum von 2.5 Stunden.
Danach wurde noch eine Stoßdosierung von 75 g der Initiatorlösung zugegeben, für 30 Minuten die Temperatur bei 80°C gehalten und anschließend der Ansatz auf 25°C abgekühlt.
Man erhielt eine 8.7 %ige alkalilösliche Dispersion mit einem pH-Wert von 3.1.

### Beispiel 4:

In einem 16 I Reaktor wurden 11.79 1 demineralisiertes Wasser, 234.5 g Acrylsäure, 1.51 kg Methacrylat-Polyethylenglykol-Methylether (45 EO-Einheiten) (Bisomer® S20W, 60 % in H₂O), 335.2 g Kalium-2-Acrylamido-2-Methyl-propansulfonat (50 % in H₂O) und 235.0 g Methacrylat-Polypropylenglykol (9 PO-Einheiten) (Blemmer® PP500) vorgelegt. Die Vorlage wurde auf 80°C erwärmt und danach eine Stoßdosierung von 210 g 2,2'-Azobis(2-methylpropionamidin)dihydrochlorid (WAKO® V50, 3 % in H₂O) zugegeben. Die Initiatordosierung wurde nach 5 Minuten mit 400 g/h eingefahren und lief über eine Zeitraum von 2.5 Stunden.
Danach wurde noch eine Stoßdosierung von 75 g der Initiatorlösung zugegeben, für 30 Minuten die Temperatur bei 80°C gehalten und anschließend der Ansatz auf 25°C abgekühlt.
Man erhielt eine 9.2 %-ige alkalilösliche Dispersion mit einem pH-Wert von 3.3.

### Beispiele 5 und 6:

Die Beispiele 3 und 4 wurden mit Natriumpersulfat als Initiator wiederholt. Man erhielt alkalilösliche Dispersionen mit einem Feststoffgehalt von 9.1 bzw. 9.0 % und einem pH von 3.2.

### Beispiel 7:

In einem 16 1 Reaktor wurden 4.1 1 demineralisiertes Wasser, 1.6 1 3%-ige Kaliumhydroxid-Lösung, 181.6 g Acrylsäure, 1.2 kg Methacrylat-Polyethylenglykol-Methylether (45 EO-Einheiten) (BisomerS20W®, 60 %-ig in H₂O) vorgelegt. Danach wurde eine Lösung aus 127.8 g 2-Acrylamido-2-Methyl-propansulfonat, 24.2 g Methallylsulfonat (Geropon MLSA®) in 193.7 g demineralisiertem Wasser sowie 181.6 g Methacrylat-Polypropylenglykolether (9 PO Einheiten) (Blemmer PP500) hinzugegeben und auf 73°C aufgeheizt. 433.4 g des Initiators 2,2'-Azobis[2-(2-imidazolin-2-yl)propan]dihydrochlorid (Wako VA-044; 10 %-ig in H₂O) wurde über 3 h hinzudosiert. Nach vollständiger Dosierung wurde die Temperatur bei 73°C gehalten und der Ansatz anschließend auf 25°C abgekühlt. Man erhielt ein 14.5 %-ige alkalilösliche Dispersion mit einem pH-Wert von 3.3.

### Beispiel 8:

In einem 16 1 Reaktor wurden 3.9 1 demineralisiertes Wasser, 1.6 1 3 %-ige Kaliumhydroxid-Lösung, 181.6 g Acrylsäure, 1.4 kg Methacrylat-Polyethylenglykol-Methylether (45 EO-Einheiten) (Plex-6934®, 50 %-ig in H₂O) vorgelegt. Danach wurde eine Lösung aus 127.8 g 2-Acrylamido-2-Methyl-propansulfonat, 24.2 g Methallylsulfonat (Geropon MLSA®) in 193.7 g demineralisiertem Wasser sowie 181.6 g Methacrylat-Polypropylenglykolether (9 PO Einheiten) (Blemmer PP500) hinzugegeben und auf 73°C aufgeheizt. 433.4 g des Initiators 2,2'-Azobis[2-(2-imidazolin-2-yl)propan]dihydrochlorid (Wako VA-044; 10 %-ig in H₂O) wurde über 3 h hinzudosiert. Nach vollständiger Dosierung wurde die Temperatur bei 73°C gehalten und der Ansatz anschließend auf 25°C abgekühlt. Man erhielt ein 14.8 %-ige alkalilösliche Dispersion mit einem pH-Wert von 3.3.

Die Dispersionen aus den Beispielen 1 bis 6 wurden mit einer Polyvinylalkohol-stabilisierten Vinylacetat-Ethylen Dispersion (Festgehalt 58 %, Glasübergangstemperatur T_{g} = 17°C) sowie 5 Gew.-% teilverseiftem Polyvinylalkohol (Hydrolysegrad ca. 90 Mol-%) unter Verwendung von 16 Gew.-% Antiblockmitteln mittels einer Druckdüse in einem Gleichstrom-Trockenturm einem Sprühtrocknungsprozeß unterworfen.
Man erhielt rieselfähige, redispergierbare, blockfreie Dispersionspulver (Pulver 1 bis 6) mit einer Schüttdichte von 400 bis 550 g/l.

Die durch Sprühtrocknung hergestellten Redispersionspulver wurden im Vergleich zu Marktprodukten in der in Tabelle 1 angegebenen Selbstverlaufsmassen-Formulierung untersucht. Die einzelnen Komponenten wurden trocken gemischt und anschließend mit 24 g Wasser pro 100 g Trockenmischung angerührt.

**Tabelle 1:**

| Menge [g] | Rohstoff | Hersteller / Lieferant |
|---|---|---|
| 110.0 | Tonerdeschmelzzement Ternal RG | Lafarge Aluminates int. |
| 240.0 | Portlandzement CEM I 42.5 R | Milke-Zement GmbH & Co.KG |
| 50 | Anhydrit | Hilliges Gipswerke KG |
| 1.50 | Kalkhydrat | Walhalla Kalkwerke |
| 269.0 | Calciumcarbonat Omyacarb 20 BG | Omya GmbH |
| 25.0 | RD-Pulver 1 bis 6 | |
| 300.0 | Quarzsand F31 | Quarzwerke GmbH |
| 1.3 | Weinsäure | Merck Eurolab GmbH |
| 1.0 | Li₂CO₃ | Merck Eurolab GmbH |
| 1.0 | Entschäumer, Agitan P 801 | Münzing Chemie GmbH |
| 1.2 | Cellulose, Tylose H 20 P2 | Clariant GmbH |
| 1000 | | |

### Anwendungstechnische Prüfungen:

Bestimmung des Ausbreitmaßes (Ausb.):
   Die Bestimmung des Fließverhaltens erfolgte nach DIN EN 12706 nach einem Zeitraum von 1, 15 und 30 Minuten.
Bestimmung der Biegezugfestigkeit (BZ):
   Die Bestimmung der Biegezugfestigkeit erfolgte nach 1 Tag (1d) und 7 Tagen (7d) und wurde in Anlehnung an prEN 13851 an Prismen 40 x 40 x 160 mm³ vorgenommen.
Bestimmung der Druckfestigkeit (DF):
   Die Bestimmung der Druckfestigkeit erfolgte nach 1 Tag (1d) und 7 Tagen (7d) und wurde in Anlehnung an prEN 13851 an Normprismen 40 x 40 x 160 mm³ vorgenommen.

Als Vergleichsmischung V1 diente ein Mörtel mit einem Redispersionspulver auf Basis eines mit Polyvinylalkohol stabilisierten Vinylacetat-Ethylen-Copolymers mit T_{g} = 17°C (RE 5011L, Wacker Chemie GmbH) und 4.6 ‰ Casein 90 mesh (Fa. Wengenroth) als Dispergiermittel.

Als Vergleichsmischung V2 diente ein Redispersionspulver auf Basis eines mit Polyvinylalkohol stabilisierten Vinylacetat-Ethylen-Copolymers mit einer T_{g} = 21°C und einem festen zugemischten Polycarboxylatetherverflüssiger auf Basis Methacrylsäure/Methoxypolyethylenglycolmethacrylat (ca. 17 mol Ethylenoxid). Es handelt sich um ein Handelsprodukt der Firma Elotex, das Pulver Elotex FL51.

Als Vergleichsmischung V3 diente ein Redispersionspulver auf Basis eines Styrol-Butylacrylat-Copolymers mit einer Glasübergangstemperatur Tg = 16°C und einem dispergierenden Verdüsungsschutzkolloid aus einem wasserlöslichen Copolymer Methacrylsäure/Methylmethacrylat/Hydroxyethylacrylat (ca. 30/10/60). Es handelt sich um ein Handelsprodukt der Firma BASF AG, das Pulver Acronal DS 3504.

**Tabelle 2:**

| RD-Pulver | Ausbreitmaß 1'[cm] | Ausb. 15'[cm] | Ausb. 30'[cm] | BZ 1d/7d [N/mm²] | DF 1d/7d [N/mm²] |
|---|---|---|---|---|---|
| Pulver 1 | 16.4 | 16.3 | 16.1 | 3.91/6.30 | 14.89/23.10 |
| Pulver 2 | 16.2 | 16.0 | 15.9 | 3.82/6.21 | 14.98/22.91 |
| Pulver 3 | 15.9 | 15.8 | 15.8 | 3.96/6.41 | 15.02/23.17 |
| Pulver 4 | 16.2 | 16.2 | 15.9 | 3.84/6.32 | 14.79/22.67 |
| Pulver 5 | 16.6 | 16.4 | 16.3 | 3.95/6.38 | 14.94/23.02 |
| Pulver 6 | 16.3 | 16.1 | 15.8 | 3.88/6.15 | 14.82/22.73 |
| Pulver V1 | 16.2 | 16.1 | 15.9 | 3.61/5.78 | 14.21/21.30 |
| Pulver V2 | 15.7 | 15.4 | 14.2 | 3.38/5.17 | 13.89/19.14 |
| Pulver V3 | 13.8 | 7.2 | - | - | - |

### Diskussion der Ergebnisse:

Die mit den Versuchsprodukten hergestellten Pulver 1 bis 6 modifizierten Mörtel weisen gegenüber der caseinhaltigen Vergleichsmischung V1 vergleichbare Verarbeitungseigenschaften des Frischmörtels auf. Das Ausbreitmaß bleibt nahezu konstant über die Zeit. Die Anfangsfestigkeiten nach 1 d liegen um 4 bis 10 % über denen von V1.
Der Zusatz von V2 und V3 bewirkt in der eingesetzten Rezeptur teilweise eine Reduktion des Ausbreitmaßes über die Zeit sowie niedrigere Festigkeiten.

### Rheologische Messungen:

Für die Messungen wurden die in Tabelle 3 angegebenen Rezepturen für das Referenzsystem und das Versuchssystem eingesetzt. Beide Mischungen wurden mit 35 g Wasser auf 100 g Trockenmischung angerührt.

Die Komponenten wurden trocken vorgemischt, anschließend wurde das Wasser zu der Mischung gegeben und 1 Minute mit einem Dissolver (Ø Rührscheibe 5 cm) bei 1000 U/min. gerührt. Bei caseinhaltigen Mischungen bzw. den Versuchssystemen betrug die nachfolgende Reifezeit 5 Minuten, bei Zementleimen mit synthetischen Verflüssigern 2 Minuten. Abschließend wurde einheitlich 10 Sekunden bei 1000 U/min. gerührt.

**Tabelle 3:**

| Rohstoff | Referenzsystem | Versuchs-System |
|---|---|---|
| Portlandzement CEM I 42.5 R | 61 Gew.-% | 61 Gew.-% |
| Tonerdeschmelzzement Ternal RG | 20 Gew.-% | 20 Gew.-% |
| Anhydrit | 15.3 Gew.-% | 15.6 Gew.-% |
| Verdicker | 0.35 Gew.-% | 0.35 Gew.-% |
| Verzögerer | 1 Gew.-% | 1 Gew.-% |
| Pulver 1 ohne Dispergiermittel | 2 Gew.-% | - |
| Verflüssiger Melflux® 1641' oder Casein | 0.35 Gew.-% | - |
| Pulver 1 | - | 2 Gew.-% |

Melflux 1641 ist ein pulverförmiger Verflüssiger der Degussa. (SKW Polymers).

Vor Beginn der rheologischen Untersuchung wurden das Referenzund Versuchssystem durch Variation des Wassergehaltes und/oder des Dispergiermittelgehaltes auf ein Ausbreitmaß nach 1 Minute von 15 ± 0.5 cm eingestellt. Die Bestimmung erfolgt in Anlehnung an DIN EN 12706 (Ausgabe Dez. 1999).

Die rheologischen Untersuchungen erfolgten mit einem luftgelagerten Rheometer (MC 200, Fa. Paar-Physika) mit eingebautem Zylindermeßsystem ( MS-Z 40 P). Die Anfangsviskosität der Zementleime betrug 1000-6000 mPas. In Oszillation durchgeführte Zeitversuche mit jeder Probe bei niedriger Deformation (γ: 0.01 - 1 %) und Kreisfrequenz (ω: 1 - 10 /s) stellten sicher, dass die Ergebnisse der späteren Belastungs- und Entlastungsversuche nicht auf erste Abbindeprozesse oder Erhärtungsvorgänge zurückzuführen waren.

Das Messprogramm für die Belastungs- und Entlastungsversuche ist in 3 Abschnitte gegliedert. In den Abschnitten 1 und 3 erfolgt die Oszillationsmessung innerhalb des linear-viskoelastischen Bereichs bei einer Deformation von γ = 0.1 % und einer Kreisfrequenz ω = 10 /s. Die Belastung (Abschnitt 2) erfolgt außerhalb des linear-viskoelastischen Bereichs (Deformation γ = 100 %, Kreisfrequenz ω = 10 /s).

Es wurden folgende Messkurven erhalten: Siehe Fig. 1-3.

## Patentansprüche

1. Dispergiermittel auf der Basis von Copolymerisaten erhältlich durch Polymerisation von
a) 5 bis 70 Gew.-% eines oder mehrerer Monomere aus der Gruppe umfassend ethylenisch ungesättigte Monocarbonsäuren, ethylenisch ungesättigte Carbonsäureamide, ethylenisch ungesättigte Dicarbonsäuren und deren Anhydride, mit jeweils 4 bis 8 C-Atomen, sowie (Meth)acrylsäuremonoester von Dialkoholen mit 2 bis 8 C-Atomen,
b) 1 bis 40 Gew.-% von einem oder mehreren Monomeren aus der Gruppe umfassend ethylenisch ungesättigte, sulfonat- oder sulfat-funktionelle Verbindungen,
c) 10 bis 80 Gew.-% von einem oder mehreren Monomeren aus der Gruppe umfassend ethylenisch ungesättigte Verbindungen von Polyethylenglykolen mit 1 bis 300 Ethylenoxideinheiten, und endständigen OH-Gruppen oder Ethergruppen -OR', wobei R' ein Alkyl-, Aryl-, Alkaryl-, Aralkyl-Rest mit 1 bis 40 C-Atomen sein kann,
d) 5 bis 80 Gew.-% von einem oder mehreren Monomeren aus der Gruppe umfassend ethylenisch ungesättigte Verbindungen von Polyalkylenglykol mit 1 bis 300 Alkylenoxideinheiten von Alkylengruppen mit 3 bis 4 C-Atomen, und endständigen OH-Gruppen oder Ethergruppen -OR', wobei R' ein Alkyl-, Aryl-, Alkaryl-, Aralkyl-Rest mit 1 bis 40 C-Atomen sein kann,
jeweils bezogen auf das Gesamtgewicht des Copolymerisats, wobei sich die Angaben in Gew.-% auf 100 Gew.-% aufaddieren.

2. Dispergiermittel nach Anspruch 1, **dadurch gekennzeichnet, dass** sich die Monomereinheiten a) von einem oder mehreren Monomeren aus der Gruppe umfassend Acrylsäure, Methacrylsäure, Itaconsäure, Fumarsäure, Maleinsäure, sowie die Salze der genannten Carbonsäuren, Maleinsäureanhydrid, Acrylamid, Methacrylamid, Hydroxyethyl(meth)acrylat, Hydroxypropyl(meth)acrylat und Hydroxybutyl(meth)acrylat ableiten.

3. Dispergiermittel nach Anspruch 1 und 2, **dadurch gekennzeichnet, dass** sich die Monomereinheiten b) von einem oder mehreren Monomeren aus der Gruppe umfassend Vinylsulfonsäure und deren Alkali- und Erdalkalimetallsalze, Styrolsulfonsäure und deren Alkali- und Erdalkalimetallsalze, Methallylsulfonsäure und deren Alkali- und Erdalkalimetallsalze, p-Methallyloxyphenylsulfonsäure und deren Alkali- und Erdalkalimetallsalze, und Sulfonsäuren der allgemeinen Formel CH₂=CR¹-CO-X-CR²R³-R⁴-SO₃H sowie deren Alkali- und Erdalkalimetallsalze, wobei X = O oder NH, und R¹, R², R³ gleich oder verschieden sind und die Bedeutung H und C₁- bis C₃-Alkyl haben, und R⁴ C₁- bis C₄-Alkylen ist ableiten.

4. Dispergiermittel nach Anspruch 1 bis 3, **dadurch gekennzeichnet, dass** sich die Monomereinheiten c) von einem oder mehreren Monomeren aus der Gruppe umfassend Acrylsäureester und Methacrylsäureester von Polyethylenglykolen und deren Alkylether mit 1 bis 6 C-Atomen, jeweils mit 1 bis 150 Ethylenoxideinheiten ableiten.

5. Dispergiermittel nach Anspruch 1 bis 4, **dadurch gekennzeichnet, dass** sich die Monomereinheiten d) von einem oder mehreren Monomeren aus der Gruppe umfassend Acrylsäureester und Methacrylsäureester von Polypropylenglykolen und Polybutylenglykolen sowie deren Alkylether mit 1 bis 6 C-Atomen, mit jeweils 3 bis 100 Alkylenoxideinheiten ableiten.

6. Dispergiermittel nach Anspruch 1 bis 4, **dadurch gekennzeichnet, dass** sich die Monomereinheiten d) von einem oder mehreren Monomeren aus der Gruppe umfassend Acrylsäureester und Methacrylsäureester von Polypropylenglykolen und Polybutylenglykolen, welche 3 bis 35 Propylenoxid- oder Butylenoxid-Einheiten enthaltene und auf welche 5 bis 80 Ethylenoxid-Einheiten aufgekappt sind ableiten.

7. Dispergiermittel nach Anspruch 1 bis 5, **dadurch gekennzeichnet, dass** noch hydrophobe Comonomereinheiten e) enthalten sind, welche sich von (Meth)acrylsäurestern von Alkoholen mit 1 bis 15 C-Atomen oder Vinylaromaten ableiten.

8. Dispergiermittel nach Anspruch 1 bis 7, **dadurch gekennzeichnet, dass** bei diesen in Rezepturen von selbstverlaufenden, hydraulisch abbindenden Massen bei Belastung im linear-viskoelastischen Bereich der Speichermodul G' über dem Verlustmodul G'' liegt, bei Belastung außerhalb des linear-viskoelastischen Bereiches ein Tangens des Verlustwinkels < 80 resultiert, und bei anschließender Relaxierung innerhalb von weniger als 15 min. der Speichermodul G' wieder über dem Verlustmodul G'' liegt.

9. Verfahren zur Herstellung der Dispergiermittel von Anspruch 1 bis 8 mittels radikalisch initierter Polymerisation.

10. Verwendung der Dispergiermittel von Anspruch 1 bis 8 bei der Sprühtrocknung von wässrigen Polymerdispersionen von Homo- oder Mischpolymerisaten aus einem oder mehreren Monomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide.

11. Verwendung der Dispergiermittel von Anspruch 1 bis 8 als Zementverflüssiger.

12. Verwendung nach Anspruch 10, **dadurch gekennzeichnet, dass** die Dispergiermittel als Verdüsungshilfe bei der Sprühtrocknung von wässrigen Dispersionen von Vinylacetat-Homopolymerisaten, Mischpolymerisaten von Vinylacetat mit Ethylen, Mischpolymerisaten von Vinylacetat mit Ethylen und einem oder mehreren weiteren Vinylestern, Mischpolymerisaten von Vinylacetat mit Ethylen und Acrylsäureester, Mischpolymerisaten von Vinylacetat mit Ethylen und Vinylchlorid, Styrol-Acrylsäureester-Copolymerisaten, Styrol-1,3-Butadien-Copolymerisaten verwendet werden.

13. Verwendung der nach Anspruch 12 erhältlichen Redispersionspulver in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), oder Gips, Kalk und Wasserglas, für die Herstellung von Bauklebern, Putzen, Spachtelmassen, Fußbodenspachtelmassen, Verlaufsmassen, Dichtschlämmen, Fugenmörtel und Farben.

14. Verwendung nach Anspruch 13 in selbstverlaufenden Bodenspachtelmassen und Fließestrichen.

15. Verwendung von Dispergiermittel gemäß Anspruch 1 bis 8 enthaltenden Redispersionspulvern als Zusatz mit verflüssigender Wirkung.

## Claims

1. Dispersant based on copolymers obtainable by polymerization of
a) 5 to 70 wt. % of one or more monomers from the group consisting of ethylenically unsaturated monocarboxylic acids, ethylenically unsaturated carboxamides, ethylenically unsaturated dicarboxylic acids and anhydrides thereof, each with 4 to 8 C atoms, and (meth)acrylate monoesters of dialcohols with 2 to 8 C atoms, b) 1 to 40 wt. % of one or more monomers from the group consisting of ethylenically unsaturated compounds with sulphonate or sulphate functional groups,
c) 10 to 80 wt. % of one or more monomers from the group consisting of ethylenically unsaturated compounds of polyethylene glycols with 1 to 300 ethylene oxide units, and terminal OH-groups or ether groups -OR', wherein R' can be an alkyl, aryl, alkaryl or aralkyl residue with 1 to 40 C atoms,
d) 5 to 80 wt. % of one or more monomers from the group consisting of ethylenically unsaturated compounds of polyethylene glycols with 1 to 300 alkylene oxide units from alkylene groups with 3 to 4 C atoms, and terminal OH-groups or ether groups - OR', wherein R' can be an alkyl, aryl, alkaryl or aralkyl residue with 1 to 40 C atoms, each based on the total weight of the copolymer, the stated amounts in wt. % totalling 100 wt. %.

2. Dispersant according to Claim 1, **characterized in that** the monomer units a) are derived from one or more monomers from the group consisting of acrylic acid, methacrylic acid, itaconic acid, fumaric acid, maleic acid, and the salts of the said carboxylic acids, maleic anhydride, acrylamide, methacrylamide, hydroxyethyl (meth)acrylate, hydroxypropyl (meth)acrylate and hydroxybutyl (meth)acrylate.

3. Dispersant according to any of Claims 1 and 2, **characterized in that** the monomer units b) are derived from one or more monomers from the group consisting of vinylsulphonic acid and alkali and alkaline earth metal salts thereof, styrenesulphonic acid and alkali and alkaline earth metal salts thereof, methallylsulphonic acid and alkali and alkaline earth metal salts thereof, p-methallyloxyphenylsulphonic acid and alkali and alkaline earth metal salts thereof, and sulphonic acids of the general formula CH₂=CR¹-CO-X-CR²R³-R⁴⁻SO₃H and alkali and alkaline earth metal salts thereof, wherein X = O or NH, and R¹, R² and R³ are the same or different and have the meaning H and C₁ to C₃ alkyl, and R⁴ is C₁ to C₄ alkylene.

4. Dispersant according to any of Claims 1 to 3, **characterized in that** the monomer units c) are derived from one or more monomers from the group consisting of acrylate esters and methacrylate esters of polyethylene glycols and alkyl ethers thereof with 1 to 6 C atoms, each with 1 to 150 ethylene oxide units.

5. Dispersant according to any of Claims 1 to 4, **characterized in that** the monomer units d) are derived from one or more monomers from the group consisting of acrylate esters and methacrylate esters of poly-propylene glycols and polybutylene glycols and alkyl ethers thereof with 1 to 6 C atoms, each with 3 to 100 alkylene oxide units.

6. Dispersant according to any of Claims 1 to 4, **characterized in that** the monomer units d) are derived from one or more monomers from the group consisting of acrylate esters and methacrylate esters of polypropylene glycols and polybutylene glycols, which contain 3 to 35 propylene oxide or butylene oxide units and are capped with 5 to 80 ethylene oxide units.

7. Dispersant according to any of Claims 1 to 5, **characterized in that** hydrophobic comonomer units e), which are derived from (meth)acrylate esters of alcohols with 1 to 15 C atoms or vinylaromatics, are also contained.

8. Dispersant according to any of Claims 1 to 7, **characterized in that** with these, in formulae for self-leveling, hydraulically setting mixtures, on loading in the linear viscoelastic region the storage modulus G' is higher than the loss modulus G", on loading outside the linear viscoelastic region a tangent of the loss angle of < 80 results, and on subsequent relaxation within less than 15 mins the storage modulus G' is again higher than the loss modulus G".

9. Process for the production of a dispersant of any of Claims 1 to 8 by radical-initiated polymerization.

10. Use of a dispersant of any of Claims 1 to 8 in the spray drying of aqueous polymer dispersions of homo- or copolymers of one or more monomers from the group consisting of vinyl esters of unbranched or branched alkylcarboxylic acids with 1 to 18 C atoms, acrylate esters or methacrylate esters of branched or unbranched alcohols with 1 to 15 C atoms, dienes, olefins, vinylaromatics and vinyl halides.

11. Use of a dispersant of any of Claims 1 to 8 as a cement plasticizer.

12. Use according to Claim 10, **characterized in that** the dispersant is used as atomization aid in the spray drying of aqueous dispersions of vinyl acetate homopolymers, copolymers of vinyl acetate with ethylene, copolymers of vinyl acetate with ethylene and one or more other vinyl esters, copolymers of vinyl acetate with ethylene and acrylate esters, copolymers of vinyl acetate with ethylene and vinyl chloride, styrene-acrylate ester copolymers and styrene-1,3-butadiene copolymers.

13. Use of the redispersion powders obtainable according to Claim 12 in construction chemical products, optionally in combination with hydraulically setting binders such as cements (Portland, aluminate, trass, slag, magnesia and phosphate cement), or gypsum, lime and waterglass, for the production of construction adhesives, plasters, fillers, floor fillers, levelling compounds, grouts, jointing mortars and paints.

14. Use according to Claim 13 in self-leveling floor fillers and flowable screeds.

15. Use of redispersion powders containing dispersants according to any of Claims 1 to 8 as additives with plasticizing action.

## Revendications

1. Agents dispersants à base de copolymérisats, pouvant être obtenus par polymérisation de
a) 5 à 70% en poids d'un ou plusieurs monomère(s) appartenant au groupe comprenant les acides monocarboxyliques éthyléniquement insaturés, les amides d'acides carboxyliques éthyléniquement insaturés, les acides dicarboxyliques éthyléniquement insaturés et leurs anhydrides, comportant, à chaque fois, 4 à 8 atomes de carbone, ainsi que des monoesters d'acide (méth)acrylique de dialcools comportant 2 à 8 atomes de carbone,
b) 1 à 40% en poids d'un ou plusieurs monomère(s) appartenant au groupe comprenant des composés à fonctionnalité sulfonate ou sulfate, éthyléniquement insaturés,
c) 10 à 80% en poids d'un ou plusieurs monomère(s) appartenant au groupe comprenant des composés éthyléniquement insaturés de polyéthylèneglycols comportant 1 à 300 unité(s) d'oxyde d'éthylène, et des groupes OH ou des groupes éther -OR' d'extrémité, R' pouvant représenter un radical alkyle, aryle, alkaryle, aralkyle comportant 1 à 40 atomes de carbone,
d) 5 à 80% en poids d'un ou plusieurs monomère(s) appartenant au groupe comprenant des composés éthyléniquement insaturés de polyalkylèneglycol comportant 1 à 300 unité(s) d'oxyde d'alkylène de groupes alkylène comportant 3 à 4 atomes de carbone, et des groupes OH ou des groupes éther -OR' d'extrémité, R' pouvant représenter un radical alkyle, aryle, alkaryle, aralkyle comportant 1 à 40 atome(s) de carbone,
à chaque fois rapporté au poids total des copolymérisats, les indications en % en poids s'additionnant pour donner 100% en poids.

2. Agents dispersants selon la revendication 1, **caractérisés en ce que** les unités monomères a) dérivent d'un ou plusieurs monomère(s) appartenant au groupe comprenant l'acide acrylique, l'acide méthacrylique, l'acide itaconique, l'acide fumarique, l'acide maléïque, ainsi que les sels des acides carboxyliques cités, l'anhydride de l'acide maléïque, l'acrylamide, le méthacrylamide, le méthacrylate d'hydroxyéthyle, le (méth)acrylate d'hydroxypropyle et le (méth)acrylate d'hydroxybutyle.

3. Agents dispersants selon les revendications 1 et 2, **caractérisés en ce que** les unités monomères b) dérivent d'un ou plusieurs monomère(s) appartenant au groupe comprenant l'acide vinylsulfonique et ses sels alcalins et alcalino-terreux, l'acide styrènesulfonique et ses sels alcalins et alcalino-terreux, l'acide méthallylsulfonique et ses sels alcalins et alcalino-terreux, l'acide p-méthallyloxyphénylsulfonique et ses sels alcalins et alcalino-terreux et les acides sulfoniques de formule générale CH₂ = CR¹-CO-X-CR²R³-R⁴-SO₃H ainsi que leurs sels alcalins et alcalino-terreux, X représentant O ou NH, et R¹, R² R³ étant identiques ou différents et représentant H et alkyle en C₁ à C₃, et R⁴ représentant alkylène en C₁ à C₄.

4. Agents dispersants selon les revendications 1 à 3, **caractérisés en ce que** les unités monomères c) dérivent d'un ou plusieurs monomère(s) appartenant au groupe comprenant les esters de l'acide acrylique et les esters de l'acide méthacrylique de polyéthylèneglycols et leurs éthers alkyliques comportant 1 à 6 atome(s) de carbone avec, à chaque fois, 1 à 150 unité(s) d'oxyde d'éthylène.

5. Agents dispersants selon les revendications 1 à 4, **caractérisés en ce que** les unités monomères d) dérivent d'un ou plusieurs monomère(s) appartenant au groupe comprenant les esters de l'acide acrylique et les esters de l'acide méthacrylique de polypropylèneglycols et de polybutylèneglycols et leurs éthers alkyliques comportant 1 à 6 atome(s) de carbone, avec, à chaque fois, 3 à 100 unités d'oxyde d'alkylène.

6. Agents dispersants selon les revendications 1 à 4, **caractérisés en ce que** les unités monomères d) dérivent d'un ou plusieurs monomère(s) appartenant au groupe comprenant les esters de l'acide acrylique et les esters de l'acide méthacrylique de polypropylèneglycols et de polybutylèneglycols, qui contiennent 3 à 35 unités d'oxyde de propylène ou d'oxyde de butylène, et qui sont « coiffés » par 5 à 80 unités d'oxyde d'éthylène.

7. Agents dispersants selon les revendications 1 à 5, **caractérisés en ce que** sont encore contenues des unités comonomères hydrophobes e), qui dérivent d'esters d'acide (méth)acrylique d'alcools comportant 1 à 15 atome(s) de carbone ou de composés vinylaromatiques .

8. Agents dispersants selon les revendications 1 à 7, **caractérisés en ce que**, avec ces derniers, dans les formulations de masses à prise hydraulique à étalement spontané, sous l'effet d'une sollicitation dans le domaine linéaire-viscoélastique, le module d'accumulation G' est supérieur au module de perte G", sous l'effet d'une sollicitation extérieure au domaine linéaire-viscoélastique, il se produit un rapprochement de l'angle de perte < 80, et au cours de la relaxation subséquente, en l'espace de moins de 15 minutes, le module d'accumulation G' redevient supérieur au module de perte G''.

9. Procédé pour la préparation des agents dispersants des revendications 1 à 8 par polymérisation initiée par voie radicalaire.

10. Utilisation des agents dispersants des revendications 1 à 8 au cours du séchage par pulvérisation de dispersions de polymères aqueuses d'homo- ou copolymérisats d'un ou plusieurs monomère(s) appartenant au groupe comprenant les esters vinyliques d'acides alkylcarboxyliques non ramifiés ou ramifiés comportant 1 à 18 atome(s) de carbone, esters de l'acide acrylique ou esters de l'acide méthacrylique d'alcools ramifiés ou non ramifiés comportant 1 à 15 atome(s) de carbone, diènes, oléfines, composés vinylaromatiques et halogénures de vinyle.

11. Utilisation des agents dispersants des revendications 1 à 8 comme fluidifiant du ciment.

12. Utilisation selon la revendication 10, **caractérisée en ce que** les agents dispersants sont utilisés comme adjuvant d'atomisation au cours du séchage par pulvérisation de dispersions aqueuses d'homopolymérisats d'acétate de vinyle, copolymérisats d'acétate de vinyle avec de l'éthylène, copolymérisats d'acétate de vinyle avec de l'éthylène et un ou plusieurs autre(s) ester(s) vinylique(s), copolymérisats d'acétate de vinyle avec de l'éthylène et des esters de l'acide acrylique, copolymérisats d'acétate de vinyle avec de l'éthylène et du chlorure de vinyle, copolymérisats styrène-ester de l'acide acrylique, copolymérisats styrène 1,3-butadiène.

13. Utilisation, dans les produits chimiques pour la construction, des poudres de redispersion pouvant être obtenues selon la revendication 12, le cas échéant en association avec des liants à prise hydraulique comme les ciments (ciments Portland, d'aluminate, de trass, de haut fourneau, de magnésie, de phosphate) ou plâtre, chaux et verre soluble, pour la production de colles pour le bâtiment, enduits, mastics, masses de revêtement de sol applicables à la spatule, masses à étaler, boues d'étanchéité, mortiers de jointoiement et peintures.

14. Utilisation selon la revendication 13 dans des masses à appliquer sur le sol à la spatule et dans des chapes fluides à étalement spontané.

15. Utilisation de poudres de redispersion contenant les agents dispersants selon les revendications 1 à 8, comme additif à effet fluidifiant.
